# EUROPÄISCHE PATENTSCHRIFT

(11) **EP 1 649 576 B1**
(45) Veröffentlichungstag und Bekanntmachung des Hinweises auf die Patenterteilung: **03.04.2019**
(21) Anmeldenummer: 04739639.5
(22) Anmeldetag: 05.06.2004
(51) Int. Cl.: H02K 5/04, H01R 33/97

(54) **GEHÄUSETEIL EINES ANTRIEBS MIT GEGENSTÜCK FÜR EINEN BAJONETTVERSCHLUSS**
HOUSING PART OF A DRIVE UNIT AND COUNTERPART FOR A BAJONETT FIXING
ELEMENT BOITIER D'UN MECANISME D'ENTRAINEMENT ET PENDANT POUR UNE FERMETURE A BAIONNETTE

(30) Priorität: 17.07.2003 DE 10332757
(43) Veröffentlichungstag der Anmeldung: 26.04.2006
(73) Patentinhaber: SEW-EURODRIVE GmbH & Co. KG, 76646 Bruchsal (DE)
(72) Erfinder: BOLLIAN, Oliver, 76275 Ettlingen (DE); GUTMANN, Michael, 67596 Dittelsheim-Hesslach (DE); WAGNER, Harald, 64823 Gross-Umstadt (DE); ÖZCAN, Abdulvahap, 76669 Bad Schönborn (DE)
(86) Internationale Anmeldenummer: PCT/EP2004/006096
(87) Internationale Veröffentlichungsnummer: WO 2005/018072

(56) Entgegenhaltungen:
- WO-A-00/45470
- DE-A- 3 710 962
- DE-A- 4 326 006
- DE-C- 19 932 850

## Beschreibung

Die Erfindung betrifft eine Antriebskomponente.

Antriebe umfassen nur Elektromotoren oder Getriebemotoren, die aus mindestens einem Getriebe und einem Elektromotor zusammengesetzt sind. Des Weiteren zählen zum Antrieb auch Umrichter, welche die Elektromotoren versorgen. Als Elektromotoren sind Asynchronmotoren, Servomotoren, Gleichstrommotoren, Reluktanzmotoren und dergleichen bekannt. Für Positionieraufgaben mit hohen Dynamikanforderungen sind vorzugsweise Servomotoren verwendbar.

Bei Servomotoren sind abtriebsseitige Quadratflansche bekannt, die mit vier Befestigungsschrauben an einem Gegenstück, also Getriebe oder Maschinenteil, zu befestigen sind. Dabei muss der Bediener bei Fertigung, Reparatur oder Wartung den Servomotor so lange am Gegenstück drehen und verschieben, bis die Lochbilder von Gegenstück und Quadratflansch derart in Übereinstimmung gebracht sind, dass Befestigungsschrauben einführbar und befestigbar sind.

Somit ist das Verbinden von Servomotoren mit Gegenstücken mit einem hohen Aufwand und daher auch mit hohen Kosten gekoppelt.

Bajonettverschlüsse sind allgemein bekannt, jedoch aufwendig und kostspielig in der Fertigung. Bei Getriebemotoren werden Bajonettverschlüsse daher nicht verwendet.

Aus der DE 43 26 006 A1 ist eine Befestigungsvorrichtung für Elektromotoren bekannt, die allerdings nur bei Außenläufermotoren vorgesehen ist.

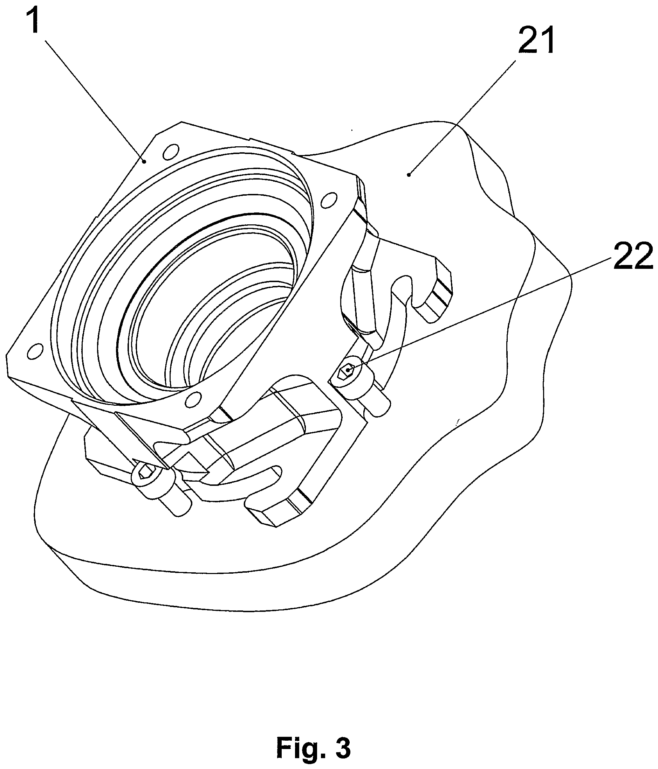

Aus der DE 37 10 962 A1 ist eine Spannvorrichtung mit Einzelantrieb für den Spinnrotor bekannt, bei der nach der dortigen Figur 3 Durchbrüche für Schrauben vorgesehen sind.

Aus der DE 199 32 850 C1 ist ein Befestigungssystem für eine Anlage bekannt, bei der in der dortigen Figur 3 Zapfen und Führungsschlitze und Zapfen vorgesehen sind.

Aus der DE 43 26 006 A1 ist eine Befestigungsvorrichtung für mit Lüfterrädern versehene Elektromotoren in Dunstabzugshauben bekannt, wobei Langlöcher mit anfangsseitig vergrößerter Bohrung zum Durchschieben von Schraubenköpfen.

Aus der WO 00/45470 ist ein elektrischer Steckverbinder, bei dem eine Bajonettverbindung vorgesehen ist.

Der Erfindung liegt daher die Aufgabe zugrunde, eine Antriebskomponente weiterzubilden, deren Betriebsaufwand und Betriebskosten, umfassend Fertigungskosten, Wartungskosten und/oder Reparaturkosten, verringert sind.

Erfindungsgemäß wird die Aufgabe bei der Antriebskomponente nach den in Anspruch 1 angegebenen Merkmalen gelöst.

Von Vorteil ist dabei, dass das abtriebsseitige Gehäuseteil der Antriebskomponente als Bajonettverschlussteil schon beim Gießen ausformbar ist.

Der ebenfalls vorgesehene Einpass bei diesem Gehäuseteil dient vorteiligerweise zum Ausrichten und Zentrieren der Antriebskomponente relativ zum Gegenstück. Daher muss der Einpass hochgenau gefertigt und nachbearbeitet werden.

Der Bajonettverschluss übernimmt bei der Erfindung keine Zentrierfunktion oder Ausrichtfunktion, weshalb der Bajonettverschluss mit seinen Bajonettflügeln schon beim Gießen genau genug fertigbar ist. Selbstverständlich ist ein Nachbearbeiten möglich, erhöht aber die Kosten und den Aufwand und erscheint nicht zweckgemäß. Der besondere Vorteil des Bajonettverschlusses liegt in dem besonders einfachen und schnellen Verbinden des Servomotors mit dem Gegenstück. Denn zuerst werden die Befestigungsschrauben in Bohrungen des Gegenstücks teilweise eingeschraubt, was einfach, schnell und leicht ausführbar ist. Danach wird die Antriebskomponente angesetzt. Das Ansetzen der Antriebskomponente ist nur mit grober Genauigkeit notwendig. Danach wird die Antriebskomponente verdreht bis zum Anschlag an den Bajonettflügeln. Dadurch ist eine Endlage bestimmt, die allerdings nicht hochgenau sein muss sondern es reicht die Fertigungsgenauigkeit beim Gießen aus. Der Bajonettverschluss ist in dieser erforderlichen Genauigkeit also sehr kostengünstig herstellbar.

Wesentlicher Vorteil ist, dass die Antriebskomponente beim Ansetzen nicht so lange verdreht und verschoben werden muss, bis Lochbilder von Gegenstück und Antriebskomponente übereinstimmen. Wegen des Bajonettverschlusses ist also ein schnelles Verbinden in einfacher Weise ermöglicht.

Bei der Erfindung ist also überraschenderweise ein Bajonettverschluss vorteilig vorsehbar und führt sogar zu einer Verringerung der gesamten Betriebskosten, obwohl die Fachwelt normalerweise einen Bajonettverschluss als kostspielig und aufwendig betrachtet.

Bei der erfinderischen Ausgestaltung sind die Befestigungsschrauben zur Bildung des Bajonettverschlusses vorgesehen. Von Vorteil ist dabei, dass kostengünstige Massenware vorsehbar ist.

Bei einer vorteilhaften Ausgestaltung umfasst das Lochbild vier, fünf, sechs oder acht Befestigungsschrauben. Von Vorteil ist dabei, dass besonders hohe Stabilität erreichbar ist.

Bei einer vorteilhaften Ausgestaltung ist der zylindrisch ausgebildete Einpass als Passzapfen ausgebildet. Von Vorteil ist dabei, dass eine hohe Genauigkeit kostengünstig erreichbar ist. Insbesondere liegt der Einpass auf einem größeren Durchmesser als der Sitz des Wellendichtrings und des Lagers. Somit ist eine hohe Zentrier- und Ausrichtgenauigkeit erreichbar, im Vergleich zu absolut gleich großen Toleranzwerten und kleinerem Durchmesser des Einpasses.

Bei einer vorteilhaften Ausgestaltung weist das abtriebsseitige Gehäuseteil des Servomotors Vertiefungen auf, die ein Ansetzen des Servomotors an das Gegenstück derart ermöglichen, dass die Köpfe der Befestigungsschrauben nach dem Einsetzen sich in den Vertiefungen befinden. Von Vorteil ist dabei, dass die Vertiefungen derart groß dimensionierbar sind, dass das Ansetzen schnell und einfach ermöglicht ist, also kein langwieriges und schwieriges Drehen und Verschieben des Servomotors notwendig ist, das verbunden ist mit dem Abstimmen von Lochbildern.

Bei einer vorteilhaften Ausgestaltung ist das Gegenstück als Maschinenteil, Getriebe oder anderes Flanschteil einer vom Servomotors angetriebenen Vorrichtung ausgebildet. Von Vorteil ist dabei, dass nur ein Lochbild und eine Bohrung mit korrekt positioniertem und dimensionierten Innendurchmesser notwendig ist. Die weitere Ausführungsform des Gegenstücks ist für die Erfindung unerheblich.

Bei einer vorteilhaften Ausgestaltung umfasst das abtriebsseitige Gehäuseteil einen Lagersitz und einen Wellendichtringsitz, insbesondere innerhalb des Einpasses. Von Vorteil ist dabei, dass die Sitze beim Transport geschützt sind. Außerdem ist der Einpass auf großem Durchmesser, wodurch die Zentrier- und Ausrichtgenauigkeit verbessert ist. Des Weiteren sind der Einpass und die Sitze in einer Aufspannung und somit hochgenau endbearbeitbar und fertigbar.

Bei einer alternativen nicht zur Erfindung gehörenden Ausgestaltung weist das abtriebsseitige Gehäuseteil abtriebsseitig zylindrische Teilabschnitte auf, die beim Drehen des Bajonettverschlusses unter den Köpfen der Befestigungsschrauben sich entlang bewegen. Von Vorteil ist dabei, dass beim Drehen so gut wie keine Verschiebung stattfindet - auch bei Wirkung der Schwerkraft.

Bei der erfinderischen Ausgestaltung weist das abtriebsseitige Gehäuseteil abtriebsseitig spiralförmige Teilabschnitte derart auf, dass bei ersten Winkelstellungen des Servomotors gegen das Gegenstück ein Ansetzen des Servomotors bei vorher in das Gegenstück teilweise eingeschraubten Befestigungsschrauben ermöglicht ist und beim Drehen des Bajonettverschlusses der Abstand der Befestigungsschrauben, insbesondere der Gewindeteile, zu den spiralförmigen Teilabschnitten zunehmend verringert. Von Vorteil ist dabei, dass das Ansetzen noch einfacher und schneller ausführbar ist. Jedoch kommt beim nachfolgenden Drehen des Servomotors ein radiales Verschieben des Servomotors gegenüber dem Gegenstück vor oder entsprechende Kräfte, wobei die Verschiebung allerdings begrenzt ist durch den Einpass und dieser auch die genannten Kräfte aufnimmt.

Bei einer vorteilhaften Ausgestaltung ist der Einpass zur Ausrichtung und Zentrierung des Servomotors zum Gegenstück vorgesehen. Von Vorteil ist dabei, dass der Bajonettverschluss kostengünstig mit bloßem Gießen gefertigt werden darf.

Bei der erfinderischen Ausgestaltung verbinden die Befestigungsschrauben nach Anziehen derselben Gegenstück und abtriebsseitiges Gehäuseteil derart fest, dass die Drehmomentrückleitung vorhanden ist, insbesondere mittels Haftreibungskräften zwischen Gegenstück und Servomotor. Von Vorteil ist dabei, dass die Position der Befestigungsschrauben durch das Lochbild am Gegenstück bestimmt ist und nicht durch entsprechend passende und entsprechend genau gefertigte Lochbilder am Servomotor. Die Befestigungsschrauben haben also nur die Funktion des gegenseitigen axialen Zusammendrückens von Gegenstück und Servomotor. Die Drehmomentrückleitung ist dann über die Haftreibung ausführbar.

Weitere Vorteile ergeben sich aus den Unteransprüchen.

Die Erfindung wird nun anhand von Abbildungen näher erläutert:

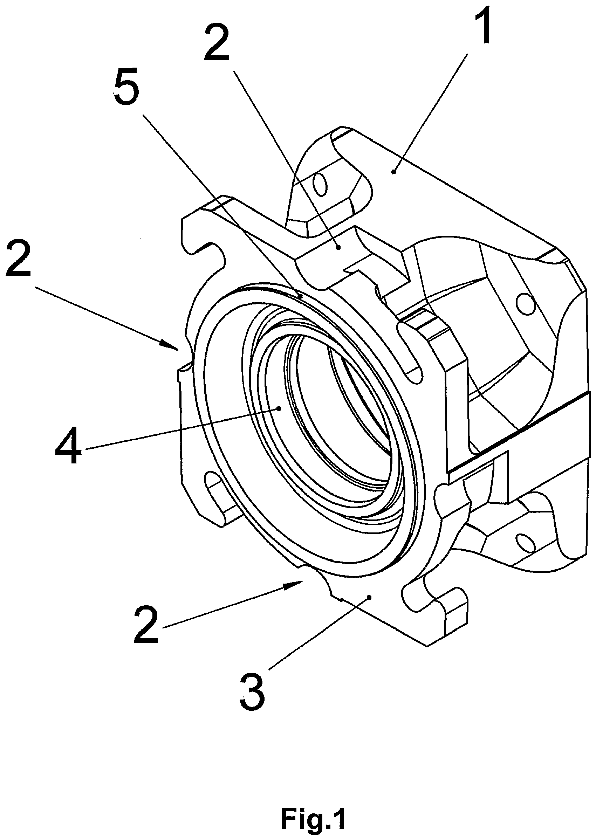

In der Figur 1 ist als abtriebsseitiges Gehäuseteil des in den Figuren nicht gezeigten Servomotors der Bajonettflansch in Schrägansicht gezeichnet.

In der Figur 2 ist das Gegenstück symbolisch gezeigt.

In der Figur 3 ist der Bajonettflansch mit teilweise eingeschraubten Befestigungsschrauben gezeigt.

In der Figur 4 ist der bis zum Anschlag an die Bajonettflügel gedrehte Bajonettflansch gezeigt, wobei die Befestigungsschrauben angezogen sind.

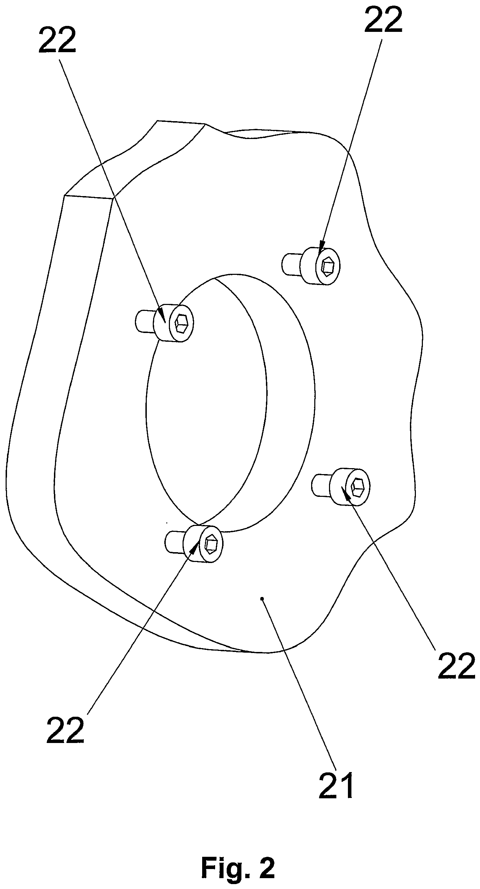

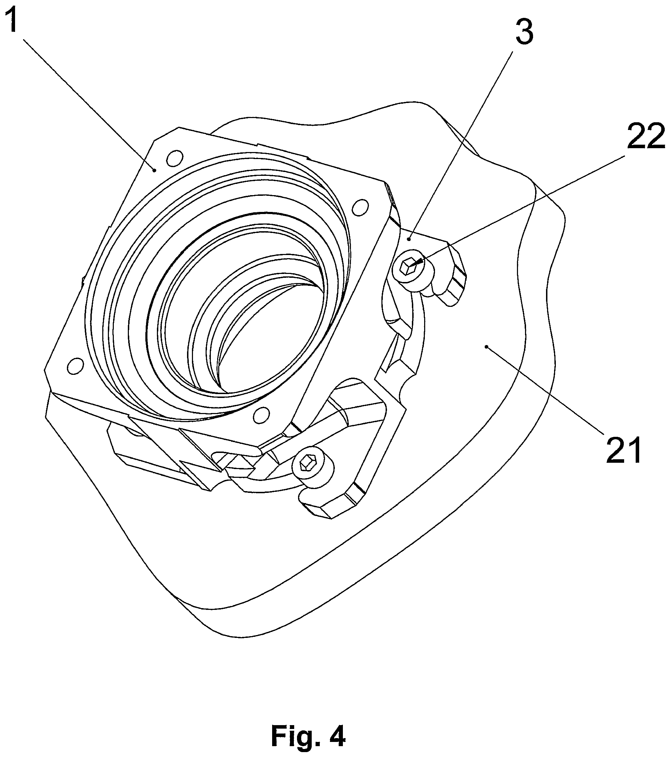

Der erfindungsgemäße Servomotor umfasst zumindest ein Gehäuseteil mit einem abtriebsseitigen Bajonettflansch 1, der vier Bajonettflügel 3 umfasst. Das Gegenstück 21 ist in Figur 2, 3 und 4 als ringähnlicher Ausschnitt eines Teils skizziert. Jedoch ist seine Form beliebig, wobei eine Bohrung und ein Lochbild für die vier Befestigungsschrauben vorgesehen ist.

Wesentlich ist bei dem Gegenstück 21 also der Innendurchmesser der Bohrung, eine Mindesttiefe dieser Bohrung und das Lochbild für die Befestigungsschrauben 22.

Der Bajonettflansch 1 weist einen nach radial außen hin, zylindrisch geformten Einpass 5 auf, der passgenau zu der Bohrung des Gegenstückes 21 geformt ist und nach Einstecken des Einpasses 5 in die Bohrung des Gegenstückes 21 zur Zentrierung und Ausrichtung des Servomotors relativ zum Gegenstück vorgesehen ist.

Der Bajonettverschluss ist mit Vertiefungen 2 versehen, die ein Aufstecken des Bajonettflansches 1 auf das Gegenstück 21 ermöglichen, obwohl die Befestigungsschrauben 22 schon vor dem Aufstecken in den jeweils vorgesehenen Bohrlöchern teilweise eingeschraubt sind. Dabei ist eine Mindest-Einschraubhöhe derart einzuhalten, dass der Schraubenkopf nach Ansetzen des Bajonettflansches 1 über den Bajonettflügeln 3 derart sich befinden, dass der Bajonettverschluss drehbar ist. Bei diesem Drehen werden die zylindrischen Teilbereiche des Bajonettflansches 1 unter den Köpfen der Befestigungsschrauben 22 hinweg gedreht. Das Drehen wird beendet durch den Anschlag der Bajonettflügeln 3 an den Gewindebereichen der Befestigungsschrauben. Danach werden dann die Befestigungsschrauben 22 fest angezogen und diese erzeugen somit hohe Haftreibungskräfte zwischen Gegenstück 21 und abtriebsseitigen Gehäuseteil, also Bajonettflansch 1, des Servomotors, wodurch eine Drehmomentrückleitung ermöglicht wird.

Bei weiteren erfindungsgemäßen Ausführungsbeispielen sind auch mehr, beispielsweise sechs oder acht, Befestigungsschrauben vorsehbar. Das Lochbild am Gegenstück 21 und am Bajonettflansch 1 ist entsprechend ausgeführt.

Bei weiteren erfindungsgemäßen Ausführungsbeispielen sind auch abtriebsseitige Bajonettflansche ausbildbar, die nur zwei Bajonettflügel oder eine andere, größere Anzahl von Bajonettflügeln umfassen.

Bei weiteren erfindungsgemäßen Ausführungsbeispielen sind ist der Einpass nicht zylindrisch sondern konisch ausgebildet, wodurch sich das Gegenstück beim Einführen leichter und schneller zentrieren lässt beziehungsweise sich selbst zentriert.

Bei weiteren erfindungsgemäßen Ausführungsbeispielen sind statt der zylindrischen Teilbereiche des Bajonettflansches 1 auch spiralförmig geformte Teilbereiche verwendbar. In einer nicht zur Erfindung gehörenden Ausführungsform können diese derart gestaltet sein, dass sogar die Vertiefungen nicht mehr notwendig sind. Denn wenn die Spiralform genügend stark ansteigt, ist es ermöglicht, den Servomotor an das Gegenstück in die Vertiefungen oder an deren Stelle anzusetzen, obwohl die Befestigungsschrauben teilweise eingeschraubt sind. Beim Drehen des Servomotors bis zum Anschlag der Bajonettflügel 3 an den Befestigungsschrauben nimmt der Abstand der spiralförmigen Teilbereiche zu den Gewindebereichen der Befestigungsschrauben zunehmend ab.

Der Bajonettflansch 1 umfasst innerhalb des Einpasses 5 einen Sitz 4 für abtriebsseitigen Wellendichtring und Lager des Servomotors, wobei auf diese Weise der Einpass auch funktioniert, wenn vom Gegenstück her Schmierstoff oder kleine Verunreinigungen vorhanden sind. Die Arbeitsweise des Servomotors ist dadurch nicht gestört, insbesondere nicht die im Servobereich vorkommenden hohen Drehzahlen von mehr als 6000 Umdrehungen pro Minute und hohen Beschleunigungen, also hohe Dynamik.

Die Erfindung ist nicht auf Servomotoren beschränkt sondern auch auf andere Elektromotoren, Getriebe oder Antriebskomponenten. Sie ist insbesondere auf beliebige zu verbindende Gehäuseteile anwendbar.

### Bezugszeichenliste

- 1: Bajonettflansch
- 2: Vertiefung
- 3: Bajonettflügel
- 4: Sitz für abtriebsseitigen Wellendichtring und Lager
- 5: Einpass
- 21: Gegenstück
- 22: Befestigungsschrauben

## Patentansprüche

1. Antriebskomponente,
umfassend mindestens ein als Bajonettflansch (1) ausgebildetes abtriebsseitiges Gehäuseteil,
wobei das abtriebsseitige Gehäuseteil zur Bildung eines Bajonettverschlusses mit einem Gegenstück (21) ausgebildet ist und einen Einpass (5), insbesondere Passzapfen, zur Verbindung mit dem Gegenstück (21) aufweist,
wobei der Einpass (5) zylindrisch oder konisch ausgeformt ist,
wobei das Gegenstück (21) eine dem Einpass (5) zugehörige, passgenaue Bohrung umfasst, wobei Befestigungsschrauben (22) am Gegenstück (21) verwendet werden,
wobei das Gegenstück (21) ein Lochbild für die Befestigungsschrauben (22) umfasst,
wobei die Lochbilder am Gegenstück (21) und am Bajonettflansch (1) entsprechend ausgeführt sind,
wobei der Bajonettflansch (1) Vertiefungen (2) aufweist, die ein Aufstecken des Bajonettflansches (1) auf das Gegenstück (21) ermöglichen, obwohl die Befestigungsschrauben (22) schon vor dem Aufstecken in den jeweils vorgesehenen Bohrlöchern eingeschraubt sind,
wobei die Mindest-Einschraubhöhe der Befestigungsschrauben (22) derart eingehalten ist, dass der jeweilige Schraubenkopf nach Ansetzen des Bajonettflansches (1) über den Bajonettflügeln (3) sich derart befindet, so dass der Bajonettverschluss drehbar ist,
wobei beim Drehen Teilbereiche des Bajonettflansches (1) unter den Köpfen der Befestigungsschrauben (22) hinweggedreht werden,
wobei diese Teilbereiche des Bajonettflansches (1) spiralförmig geformte Teilbereiche sind, damit beim Drehen des Servomotors bis zum Anschlag der Bajonettflügel (3) an den Befestigungsschrauben (22) der Abstand der spiralförmigen Teilbereiche zu den Gewindebereichen der Befestigungsschrauben (22) zunehmend abnimmt,
wobei das Drehen durch den Anschlag der Bajonettflügel (3) an den Gewindebereich der Befestigungsschrauben (22) beendet wird,
wobei nach Beendigung des Drehens die Befestigungsschrauben (22) zur Erzeugung hoher Haftreibungskräfte zwischen Gegenstück (21) und Bajonettflansch (1) des Servomotors zum Ermöglichen einer Drehmomentrückleitung fest angezogen werden.

2. Antriebskomponente nach Anspruch 1,
**dadurch gekennzeichnet, dass**
das Lochbild vier, fünf, sechs oder acht Befestigungsschrauben (22) umfasst.

3. Antriebskomponente nach mindestens einem der vorangegangenen Ansprüche,
**dadurch gekennzeichnet, dass**
der zylindrisch ausgebildete Einpass (5) als Passzapfen ausgebildet ist.

4. Antriebskomponente nach mindestens einem der vorangegangenen Ansprüche,
**dadurch gekennzeichnet, dass**
das abtriebsseitige Gehäuseteil des Servomotors Vertiefungen (2) aufweist, die ein Ansetzen des Servomotors an das Gegenstück (21) derart ermöglichen, dass die Köpfe der Befestigungsschrauben (22) nach dem Einsetzen sich in den Vertiefungen (2) befinden.

5. Antriebskomponente nach mindestens einem der vorangegangenen Ansprüche,
**dadurch gekennzeichnet, dass**
das Gegenstück (21) als Maschinenteil, Getriebe oder anderes Teil einer vom Servomotor angetriebenen Vorrichtung ausgebildet ist.

6. Antriebskomponente nach mindestens einem der vorangegangenen Ansprüche,
**dadurch gekennzeichnet, dass**
das abtriebsseitige Gehäuseteil einen Lagersitz und einen Wellendichtringsitz umfasst, insbesondere innerhalb des Einpasses (5).

7. Antriebskomponente nach mindestens einem der vorangegangenen Ansprüche,
**dadurch gekennzeichnet, dass**
der Einpass (5) zur Ausrichtung und Zentrierung des Servomotors zum Gegenstück (21) vorgesehen ist.

8. Antriebskomponente nach mindestens einem der vorangegangenen Ansprüche,
**dadurch gekennzeichnet, dass**
die Befestigungsschrauben (22) nach Anziehen derselben Gegenstück (21) und abtriebsseitiges Gehäuseteil derart fest verbinden, dass die Drehmomentrückleitung vorhanden ist, insbesondere mittels Haftreibungskräften zwischen Gegenstück (21) und Servomotor.

9. Antriebskomponente nach mindestens einem der vorangegangenen Ansprüche,
**dadurch gekennzeichnet, dass**
das abtriebsseitige Gehäuseteil durch Gießen hergestellt ist.

10. Antriebskomponente nach mindestens einem der vorangegangenen Ansprüche,
**dadurch gekennzeichnet, dass**
nur der Einpass (5) und die Sitze für Wellendichtring und Lager endbearbeitet sind, also gefräst, gedreht und/oder geschliffen sind.

## Claims

1. A drive component,
comprising at least one output-side housing part designed as a bayonet flange (1), wherein the output-side housing part in order to form a bayonet lock is designed with a counter-part (21), and has a fitting element (5), in particular fitting pin, for connection to the counter-part (21),
wherein the fitting element (5) is formed to be cylindrical or conical,
wherein the counter-part (21) comprises an accurately-fitting bore associated with the fitting element (5),
wherein fastening screws (22) are used on the counter-part (21),
wherein the counter-part (21) comprises a pattern of holes for the fastening screws (22),
wherein the patterns of holes are embodied correspondingly on the counter-part (21) and on the bayonet flange (1),
wherein the bayonet flange (1) has indentations (2) which enable the bayonet flange (1) to be placed on the counter-part (21), although the fastening screws (22) are screwed into the boreholes provided in each case already prior to the flange being placed on, wherein the minimum screw reach of the fastening screws (22) is observed such that the respective screw head, once the bayonet flange (1) has been placed over the bayonet wings (3), is located such that the bayonet lock can be turned,
wherein upon turning partial regions of the bayonet flange (1) are turned away beneath the heads of the fastening screws (22),
wherein these partial regions of the bayonet flange (1) are partial regions formed in a spiral, so that upon the servomotor being turned until the bayonet wings (3) strike the fastening screws (22) the spacing of the spiral-shaped partial regions relative to the threaded regions of the fastening screws (22) increasingly decreases,
wherein the turning is terminated by the bayonet wings (3) striking the threaded region of the fastening screws (22),
wherein after termination of the turning the fastening screws (22) are tightened securely in order to produce high static friction forces between the counter-part (21) and bayonet flange (1) of the servomotor in order to permit torque return.

2. A drive component according to Claim 1,
**characterised in that**
the pattern of holes comprises four, five, six or eight fastening screws (22).

3. A drive component according to at least one of the preceding claims,
**characterised in that**
the cylindrically designed fitting element (5) is formed as a fitting pin.

4. A drive component according to at least one of the preceding claims,
**characterised in that**
the output-side housing part of the servomotor has indentations (2) which make it possible to place the servomotor on the counter-part (21) such that the heads of the fastening screws (22) after insertion are located in the indentations (2).

5. A drive component according to at least one of the preceding claims,
**characterised in that**
the counter-part (21) is designed as a machine part, gear unit or other part of a device driven by the servomotor.

6. A drive component according to at least one of the preceding claims,
**characterised in that**
the output-side housing part comprises a bearing seat and a shaft sealing ring seat, in particular within the fitting element (5).

7. A drive component according to at least one of the preceding claims,
**characterised in that**
the fitting element (5) is provided for orienting and centring the servomotor relative to the counter-part (21).

8. A drive component according to at least one of the preceding claims,
**characterised in that**
the fastening screws (22) after tightening thereof connect the counter-part (21) and output-side housing part securely such that the torque return is present, in particular by means of static friction forces between the counter-part (21) and servomotor.

9. A drive component according to at least one of the preceding claims,
**characterised in that**
the output-side housing part is produced by casting.

10. A drive component according to at least one of the preceding claims,
**characterised in that**
only the fitting element (5) and the seats for the shaft sealing ring and bearings are finished, i.e. milled, turned and/or ground.

## Revendications

1. Elément structurel d'entraînement
muni d'au moins une partie de carter située côté sortie et réalisée sous la forme d'une bride (1) de baïonnette,
ladite partie de carter, située côté sortie, étant dotée d'une pièce complémentaire (21) en vue de former une fermeture à baïonnette, et comportant une zone insérable (5), notamment un tenon d'adaptation, en vue de la liaison avec ladite pièce complémentaire (21),
laquelle zone insérable (5) est de configuration cylindrique ou conique,
la pièce complémentaire (21) étant munie d'un perçage d'ajustement précis, associé à ladite zone insérable (5),
sachant que des vis de fixation (22) sont utilisées sur ladite pièce complémentaire (21), laquelle pièce complémentaire (21) présente une constellation de trous destinée auxdites vis de fixation (22),
les constellations de trous étant de réalisations correspondantes sur ladite pièce complémentaire (21) et sur la bride (1) de baïonnette,
laquelle bride (1) de baïonnette est pourvue de renfoncements (2) qui permettent un emboîtement de ladite bride (1) de baïonnette sur ladite pièce complémentaire (21), bien que les vis de fixation (22) soient déjà vissées, préalablement à l'emboîtement, dans les trous forés respectivement prévus,
la hauteur minimale de vissage desdites vis de fixation (22) étant respectée de telle sorte que la tête d'une vis considérée se trouve au-dessus des ailes (3) de baïonnette, après mise en place de ladite bride (1) de baïonnette, de façon que la fermeture à baïonnette puisse tourner,
des régions partielles de la bride (1) de baïonnette étant amenées rotativement, au cours de la rotation, au-dessous des têtes desdites vis de fixation (22),
sachant que ces régions partielles de ladite bride (1) de baïonnette sont des régions partielles de forme spiroïdale, de telle manière que, lors de la rotation du servomoteur jusqu'à la venue en butée des ailes (3) de baïonnette contre les vis de fixation (22), la distance, comprise entre lesdites régions partielles spiroïdales et les régions filetées desdites vis de fixation (22), décroisse de plus en plus,
sachant que la venue en butée desdites ailes (3) de baïonnette, contre la région filetée desdites vis de fixation (22), marque l'achèvement de la rotation,
sachant qu'une fois ladite rotation achevée, lesdites vis de fixation (22) sont bloquées en vue d'engendrer de grandes forces de frottement statique entre la pièce complémentaire (21) et la bride (1) de baïonnette dudit servomoteur, afin de permettre un renvoi du couple de rotation.

2. Elément structurel d'entraînement selon la revendication 1,
**caractérisé par le fait que**
la constellation de trous compte quatre, cinq, six ou huit vis de fixation (22).

3. Elément structurel d'entraînement selon au moins l'une des revendications précédentes,
**caractérisé par le fait que**
la zone insérable (5), de configuration cylindrique, est réalisée sous la forme d'un tenon d'adaptation.

4. Elément structurel d'entraînement selon au moins l'une des revendications précédentes,
**caractérisé par le fait que**
la partie de carter du servomoteur, située côté sortie, est dotée de renfoncements (2) permettant une mise en place dudit servomoteur sur la pièce complémentaire (21), de façon telle que les têtes des vis de fixation (22) se trouvent dans lesdits renfoncements (2) à l'issue de l'insertion.

5. Elément structurel d'entraînement selon au moins l'une des revendications précédentes,
**caractérisé par le fait que**
la pièce complémentaire (21) est réalisée en tant que partie de machine, transmission ou autre partie d'un dispositif entraîné par le servomoteur.

6. Elément structurel d'entraînement selon au moins l'une des revendications précédentes,
**caractérisé par le fait que**
la partie de carter, située côté sortie, inclut un siège de palier et un siège de bague d'étanchement d'arbre, en particulier à l'intérieur de la zone insérable (5).

7. Elément structurel d'entraînement selon au moins l'une des revendications précédentes,
**caractérisé par le fait que**
la zone insérable (5) est prévue pour l'orientation et le centrage du servomoteur par rapport à la pièce complémentaire (21).

8. Elément structurel d'entraînement selon au moins l'une des revendications précédentes,
**caractérisé par le fait**
**qu'**à l'issue du blocage des vis de fixation (22), ces dernières relient fermement la pièce complémentaire (21) et la partie de carter située côté sortie, de telle sorte que le renvoi du couple de rotation soit instauré, en particulier, au moyen de forces de frottement statique entre ladite pièce complémentaire (21) et le servomoteur.

9. Elément structurel d'entraînement selon au moins l'une des revendications précédentes,
**caractérisé par le fait que**
la partie de carter, située côté sortie, est produite par coulée.

10. Elément structurel d'entraînement selon au moins l'une des revendications précédentes,
**caractérisé par le fait que**
seuls la zone insérable (5), et les sièges dévolus à une bague d'étanchement d'arbre et à un palier, font l'objet d'un usinage final et sont donc fraisés, façonnés au tour et/ou rectifiés par meulage.
